# EUROPÄISCHE PATENTSCHRIFT

(11) **EP 0 658 498 B1**
(45) Veröffentlichungstag und Bekanntmachung des Hinweises auf die Patenterteilung: **04.06.1997**
(21) Anmeldenummer: 94110827.6
(22) Anmeldetag: 12.07.1994
(51) Int. Cl.: B65G 17/24, B65G 47/26

(54) **Stauförderkette**
Accumulation conveyor chain
Chaîne pour convoyeur à accumulation

(30) Priorität: 16.12.1993 DE 9319371 U
(43) Veröffentlichungstag der Anmeldung: 21.06.1995
(60) Teilanmeldung: 96118544.4
(73) Patentinhaber: JOH. WINKLHOFER & SÖHNE GmbH & Co KG, D-81369 München (DE)
(72) Erfinder: Dag, Heinrich, D-82377 Penzberg (DE)
(74) Vertreter: Grünecker, Kinkeldey, Stockmair & Schwanhäusser Anwaltssozietät

(56) Entgegenhaltungen:
- EP-A- 0 319 720
- GB-A- 2 163 718
- US-A- 2 906 390

## Beschreibung

Die Erfindung betrifft eine Stauförderkette der im Oberbegriff des Patentanspruchs 1 angegebenen Art.

Bei einer aus dem Prospekt "IWIS-Ketten, Stauförderketten SF" der Firma Joh. Winklhofer & Söhne bekannten Stauförderkette ist auf der Buchse jedes zweiten Gelenks eine Kunststoff-Förderrolle gelagert, und zwar zwischen den beiden Innenlaschen. Alle Gelenkbolzen sind über die Außenlaschen hinaus verlängert und tragen auf beiden Enden eine Laufrolle. Bei gegebener Außenabmessung der Gelenkkette ist die Breite jeder Förderrolle durch den Innenabstand zwischen den Innenlaschen begrenzt. Bei Belastung der Förderrollen werden die Laufrollen auf den zwischen jeweils zwei Förderrollen angeordneten Gelenkbolzen nicht nennenswert belastet. Bei einem Stau können diese Laufrollen jedoch wegen der darunterliegenden Abstützung für die Laufrollen nicht nach unten ausweichen. Die Bauweise ist aufwendig und vielteilig. Das Gewicht der Stauförderkette pro Längeneinheit ist relativ hoch. Die Laufrollen werden durch Unterlegscheiben gegen Abziehen gesichert, wobei die Unterlegscheiben durch die in einer Durchmesserebene kaltverformten Enden der Gelenkbolzen abgestützt sind.

Ähnliche Stauförderketten sind bekannt aus: DE-C1-34 06 352; DE-A1-34 38 786; DE-A1-32 36 577; DE-U-82 16 554; EP-A-319 720; GB-A-2 163 718.

Der Erfindung liegt die Aufgabe zugrunde, eine Stauförderkette der eingangs genannten Art zu schaffen, die kostengünstig herstellbar und leicht ist, aus wenigen Einzelteilen besteht und sich universell einsetzen läßt.

Die gestellte Aufgabe wird erfindungsgemäß mit den im Patentanspruch 1 enthaltenen Merkmalen gelöst.

Bei dieser Ausbildung sind in den Gelenken, die bei einer Belastung der Förderrollen nicht direkt belastet sind, keine Laufrollen vorgesehen. Beim Fördern von Objekten wird nämlich das Hauptgewicht über die Förderrollen und die diesen zugeordneten Laufrollen in das üblicherweise vorgesehene Traggestell eingeleitet, auf dem die Stauförderkette mit den Laufrollen abgestützt ist. Da die Stauförderkette im Betrieb einer Fördervorrichtung normalerweise unter einer Vorspannung steht, benötigen die von Laufrollen freien Gelenke keine Abstützung. Die Stauförderkette kommt mit optimal wenigen Teilen aus. Durch den Wegfall von Laufrollen in den freien Teilungsgelenken hat die Stauförderkette im Betrieb zusätzliche Freiheitsgrade, die es ermöglichen, daß z.B. bei einem gewaltsamen Stau die freien Teilungsgelenke nach oben oder/und nach unten ausweichen, ohne daß es zu gravierenden Schäden kommt. Durch diese Bauweise ergibt sich eine zusätzliche Elastizität für kritische Betriebszustände. Ein weiterer Vorteil ist die universelle Einsetzbarkeit der Stauförderkette in Fördervorrichtungen mit Kettenrädern für Normalgelenkketten oder mit Kettenrädern für Langglied-Stauförderketten. Obwohl die Stauförderkette dieser Bauweise eine Normalgelenkteilung besitzt, ist durch die Weglassung der Laufrollen in den von Förderrollen freien Gelenken auch ein ordnungsgemäßes Eingriffsverhältnis zwischen der Stauförderkette und einem Kettenrad für Langglied-Förderketten gewährleistet. Die Stauförderkette wird leichter als herkömmliche Stauförderketten gleicher Grundabmessungen und erzeugt ein leiseres Laufgeräusch.

Eine besonders wichtige Ausführungsform mit eigenständiger erfinderischer Bedeutung geht aus Anspruch 2 hervor. Durch die Verlegung der Innenlasche bzw. des Innenlaschenpaares in die Längsmitte der Stauförderkette lassen sich die äußeren Grenzen der Lauffläche der Förderrolle weiter nach außen setzen, da die Förderrollenbreite nicht mehr durch den Abstand zwischen den Innenlaschen, sondern durch den weiteren Abstand zwischen den Außenlaschen begrenzt ist. Außerdem ergibt sich eine geöffnete Struktur der Stauförderkette, die für bestimmte Anwendungsfälle wünschenswert sein kann.

Wird die volle Breite zwischen den Außenlaschen für. Förderrollen benutzt, dann müssen zwei Förderrollen, gemäß der Ausführungsform von Anspruch 3, in diesem Gelenk vorgesehen werden. Es ist aber auch denkbar, nur je eine Förderrolle in dem Gelenk vorzusehen, und die nächstfolgende Förderrolle im übernächsten Gelenk auf der anderen Seite der Innenlasche oder des Innenlaschenpaares anzuordnen.

Sind wie bei der Ausführungsform gemäß Anspruch 3 großdurchmeßrige Förderrollen in jedem zweiten Gelenk vorgesehen, dann entsteht eine relativ zusammenhängende Förderfläche für das Fördergut. Es ist aber auch denkbar, die Abstände zwischen den Förderrollen in Kettenlängsrichtung zu vergrößern, z.B. für große und leichtgewichtige Fördergüter, um die Stauförderkette noch leichter, beweglicher und kostengünstiger auszubilden.

Die Ausführungsform gemäß Anspruch 4 ist zweckmäßig, weil einerseits kräftige und belastbare Innenlaschen und andererseits optimal große Förderrollen benutzt werden können, was für bestimmte Anwendungszwecke von Vorteil ist. Außerdem wird durch die Überlappung eine Führung der Förderrollen unter extremen Belastungen oder beim Verkanten gebildet.

Die Ausführungsform gemäß Anspruch 5 ist zweckmäßig, weil die Stauförderkette zwischen den Gelenken mit den Förderrollen sehr schmal wird, und weil die Führungsflächen, auf denen die Laufrollen gegebenenfalls laufen, wünschenswert nahe zueinander gerückt werden können, ohne daß die Gefahr besteht, daß die freien Enden der kürzeren Gelenkbolzen beim eingangs erwähnten Ausweichen bei einem gewaltsamen Stau mit den Führungsflächen kollidieren oder diese beschädigen.

Die Ausführungsform gemäß Anspruch 6 zeichnet sich durch eine weitere Verringerung der Einzelteile und eine Verringerung der Gesamtbreite der Kette aus. Durch den Wegfall der bisher üblichen Unterlegscheiben zur Abziehsicherung der Laufrollen wird an jeder Kettenseite Platz gespart. Die Aufgabe der Abziehsicherung wird von den verdickten Enden direkt übernommen. Ferner wird durch diese Maßnahme Gewicht eingespart und die Montage der Stauförderkette vereinfacht.

Bei der Ausführungsform gemäß Anspruch 7 wird auf bisher nicht übliche Weise für eine zuverlässige Abziehsicherung der Laufrollen gesorgt. Durch die Stauchungen oder Nietungen in mindestens zwei zueinander versetzten Durchmesserebenen des Gelenkbolzens (ggfs. mehrfache Dachnietung) wird bei relativ geringer Stauchung eine nahezu über den gesamten Umfang wirksame Abziehsicherung jeder Laufrolle erreicht.

Die Ausführungsform gemäß Anspruch 8 zeichnet sich durch Wartungsfreiheit oder zumindest Wartungsarmut aus, da die Werkstoffe mit selbstschmierenden Eigenschaften hohe Standzeiten ohne Schaden für die Stauförderkette gewährleisten, ohne daß von Hand oder mit Schmiereinrichtungen nachgeschmiert werden müßte. Die Beläge oder Büchsen, die für die Schmierung bzw. Dauerschmierung verantwortlich sind, werden überall dort eingesetzt, wo Komponenten der Stauförderkette im Betrieb aneinander reiben oder sich relativ zueinander bewegen.

Eine weitere, vorteilhafte Ausführungsform geht schließlich aus Anspruch 9 hervor. Der die Innenlasche oder das Innenlaschenpaar repräsentierende Formteil läßt sich mit modernen Fertigungsverfahren formgenau, gestaltfest und gegebenenfalls leichtgewichtig herstellen, wodurch einige Bearbeitungsschritte bei der Herstellung der Stauförderkette eingespart werden.

Anhand der Zeichnung werden Ausführungsformen der Erfindung erläutert. Es zeigen:
- Fig. 1: einen Schnitt einer Stauförderkette in der Ebene der Gelenkachse,
- Fig. 2: eine um 90° gedrehte Seitenansicht zu Fig. 1, und
- Fig. 3: eine Ausführungsvariante im Schnitt.

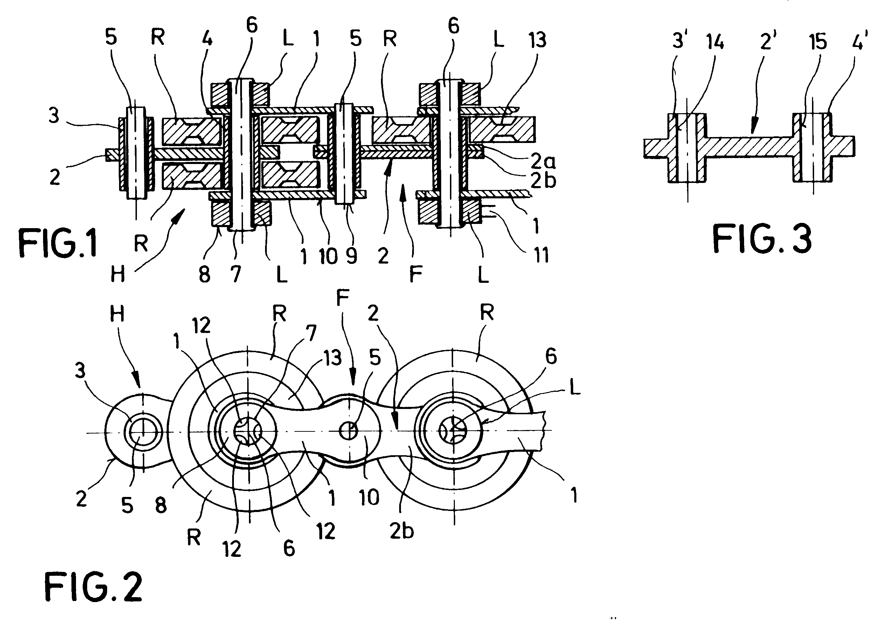

Eine Stauförderkette F gemäß den Fig. 1 und 2 ist aufgebaut auf einer herkömmlichen Gelenkkette H, bestehend aus Außenlaschen 1, Innenlaschen 2, in die Innenlaschen 2 eingepreßte Buchsen 3, 4, in den Buchsen 3, 4 drehbar gelagerten, in die Außenlaschen 1 eingepreßten, kurzen Gelenkbolzen 5 und aus über die Außenlaschen 1 hinaus verlängerten Gelenkbolzen 6. Es könnte jedoch auch eine Hohlbolzen-Gelenkkette mit hohlen Gelenkbolzen anstelle der Gelenkbolzen 5 und/oder 6 verwendet werden.

Abweichend zur normalen Bauweise ist die eine Innenlasche 2 in der Mitte zwischen den beiden Außenlaschen 1 vorgesehen. In der rechten Hälfte von Fig. 1 ist angedeutet, daß zwei Innenlaschen 2a, 2b ein Innenlaschenpaar 2 bilden. Die Stauförderkette F wird natürlich entweder mit der Innenlasche 2 oder mit dem Innenlaschenpaar 2 durchgehend ausgestattet. Als Detailvariante ist in Fig. 3 eine einteilig mit den Buchsen 3' und 4' ausgebildete Innenlasche 2' gezeigt, wobei die Bohrungen 14, 15 in den Buchsen 3', 4' entweder gleich eingeformt oder nachträglich, z.B. durch Stoßen oder ähnliches, gebildet werden. Die Innenlasche 2' kann beispielsweise durch Pressen, Fließpressen, Schmieden und Gesenkschmieden, Sintern oder dgl. hergestellt werdenn, und zwar aus metallischen Werkstoffen, aus Sinterwerkstoffen oder auch aus Kunststoff oder verstärktem Kunststoff, und gegebenenfalls sogar aus einem Material mit selbstschmierenden Eigenschaften.

Bei der gezeigten Ausführungsform ist bei jedem zweiten Gelenk eine Förderrolle R bzw. sind zwei Förderrollen R paarweise in den Zwischenräumen zwischen den Außenlaschen 1 und der Innenlasche 2 bzw. dem Innenlaschenpaar 2 bzw. 2' angeordnet, die frei drehbar auf der Buchse 4 gelagert ist bzw. sind. Auf dem Gelenkbolzen 6 in der Buchse 4 sind auf beiden freien Enden Laufrollen L frei drehbar gelagert, die dadurch abziehgesichert sind, daß die Enden 7 der verlängert ausgebildeten Gelenkbolzen 6 durch Kaltverformen unmittelbar bei Stirnseiten 8 der Laufrollen L verdickt sind. Zweckmäßigerweise wird in zwei zueinander versetzten Durchmesserebenen der Enden 7, bezogen auf die Achse des Gelenkbolzens 6, gestaucht oder genietet, um eine allseitige Abziehsicherung für die Laufrolle L zu schaffen (Fig. 2, Bezugszeichen 12 für die mehreren in Umfangsrichtung über das Ende 7 verteilten Stauchungen oder Nietungen, z.B. mehrfache Dachnietung).

Die gegenüber den Gelenkbolzen 6 kürzeren Gelenkbolzen 5 sind - wie erläutert - in die Außenlaschen 1 eingepreßt. Ihre Enden 9 liegen unmittelbar an den Außenseiten 10 der Außenlaschen 1, und zwar um die Kette so schlank wie möglich zu halten.

Gemäß den Fig. 1 und 2 sind die Förderrollen R jeweils auf jedem zweiten Gelenk vorgesehen. Dies ist aber nicht unbedingt erforderlich, die Teilung der Förderrollen könnte auch größer und sogar unregelmäßig gewählt werden. Wichtig ist, daß auf den von Förderrollen R freien und kürzeren Gelenkzapfen 5 auch keine Laufrollen L vorgesehen sind.

Die Innenlaschen bzw. Innenlaschenpaare 2, 2' müssen nicht notwendigerweise in der Mitte zwischen den Außenlaschen 1 auf die Buchsen 3, 4 aufgepreßt sein, sondern könnten auch in herkömmlicher Bauweise direkt angrenzend an die Außenlaschen 1 gesetzt werden. Dann könnte eine einzige, zweite Förderrolle R zwischen die Innenlaschen gesetzt werden. Die förderrollenfreien Gelenkbolzen wären trotzdem ohne Laufrollen L und verkürzt ausgebildet.

Wie in der rechten Hälfte von Fig. 1 angedeutet, könnte auch eine einzige Förderrolle R pro Buchse 4 vorgesehen sein, wobei zweckmäßigerweise von einem Gelenk zum anderen die Förderrollen R zueinander versetzt bzw. jeweils an der anderen Seite der Innenlasche bzw. des Innenlaschenpaares 2 angeordnet wären.

Die bei der gezeigten Ausführungsform verwendeten Förderrollen R bestehen zweckmäßigerweise aus einem Kunststoff und sind mit gewichtssparenden Ausnehmungen 13 versehen.

Die Förderrollen R bestehen zweckmäßigerweise aus einem Kunststoff mit selbstschmierenden Eigenschaften, so daß sie wartungsarm laufen. Gegebenenfalls sind, falls aus Metall bestehende Förderrollen verwendet werden, in diese selbstschmierende Büchsen aus Kunststoff eingepreßt. Um die Stauförderkette F wartungsfrei oder zumindest wartungsarm auszubilden, sind zweckmäßigerweise zwischen den zueinander beweglichen Komponenten der Stauförderkette Platten, Büchsen oder Beläge aus Werkstoffen mit selbstschmierenden Eigenschaften vorgesehen. So könnten beispielsweise die Buchsen 3, 4 innen mit Belägen oder Büchsen aus selbstschmierenden Werkstoffen ausgekleidet sein und auch die Laufrollen L bzw. die Förderrollen R. Aufgrund solcher seltschmierenden Komponenten (Sinter- oder Kunststoffmaterial) entsteht an den Berührungspunkten in den Gelenken kein Passungsrost.

Die Außenränder der Laufflächen der Förderrollen R liegen benachbart zu den Innenseiten der Außenlaschen 1, so daß sich für das Fördergut auf den Förderrollen R optimal breite Auflagebereiche ergeben.

## Patentansprüche

1. Stauförderkette (F) mit einer Gelenkkette (H) mit über hohle oder massive Gelenkbolzen (5, 6) gekuppelten, abwechselnden Innen- und Außenlaschen (1, 2,) 2'), bei denen die Buchsen (3, 4) in den Innenlaschen und die die Buchsen drehbar durchsetzenden Gelenkbolzen in den Außenlaschen festgelegt sind, wobei auf entlang der Kettenlänge vorbestimmten Buchsen (4) großdurchmeßrige Förderrollen (R) und auf über ihre Buchsen nach außen verlängerten Gelenkbolzen (6) beidseitig kleinere Laufrollen (L) gelagert sind, **dadurch gekennzeichnet**, daß die Gelenkbolzen (5) in von Förderrollen (R) freien Buchsen (3) unverlängert und frei von Laufrollen (L) sind.

2. Stauförderkette nach Anspruch 1, **dadurch gekennzeichnet**, daß jeweils eine Innenlasche oder ein Innenlaschenpaar (2, 2') in der Längsmitte der beiden in Kettenlängsrichtung benachbarten Buchsen (3, 4) im Abstand zu den Außenlaschen (1) angeordnet ist und daß an wenigstens einer Außenseite der Innenlasche bzw. des Innenlaschenpaares (2, 2') eine Förderrolle (R) zwischen der Innenlasche bzw. dem Innenlaschenpaar (2, 2') und der Außenlasche (1) angeordnet ist.

3. Stauförderkette nach wenigstens einem der Ansprüche 1 oder 2, **dadurch gekennzeichnet**, daß zu beiden Seiten der Innenlasche bzw. des Innenlaschenpaares (2, 2') je eine Förderrolle (R) vorgesehen ist, und daß, vorzugsweise in einer Hohlbolzen-Gelenkkette (H) mit Normalgelenkteilung, auf jede zweiten Gelenkbolzen (6) zwei Förderrollen (R) und zwei Laufrollen (L) angeordnet sind.

4. Stauförderkette nach Anspruch 2, **dadurch gekennzeichnet**, daß sich der Umriß der Innenlasche bzw. des Innenlaschenpaares (2, 2') mit dem Umriß der Förderrolle (R) auf der Buchse (4) der nächstfolgenden Innenlasche bzw. des Innenlaschenpaares (2, 2') überlappt.

5. Stauförderkette nach wenigstens einem der Ansprüche 1 bis 4**, dadurch gekennzeichnet**, daß die Enden (9) der kürzeren Gelenkbolzen (5) unmittelbar an den Außenseiten (10) der Außenlaschen (1) angeordnet sind und, vorzugsweise innerhalb der Kettenrad- und gegebenenfalls der Kettenführungs-Eingriffsbereiche (11) der Laufrollen (L) liegen.

6. Stauförderkette nach wenistens einem der Ansprüche 1 bis 5, **dadurch gekennzeichnet**, daß zur Abziehsicherung jeder Laufrolle (L) das freie Ende (7) des längeren Gelenkbolzens (6) direkt an der Stirnseite (8) der Laufrolle (L) durch Kaltverformen, z.B. durch Stauchen, Vernieten oder dgl., verdickt ausgebildet ist.

7. Stauförderkette nach Anspruch 6**, dadurch gekennzeichnet**, daß das freie Ende (7) durch Stauchen in mindestens zwei um die Achse des Gelenkbolzens zueinander versetzten Durchmesser-Ebenen (12), z.B. mehrfache Dachnietung, kaltverformt ist.

8. Stauförderkette nach den Ansprüchen 1 bis 7, **dadurch gekennzeichnet**, daß zwischen relativ zueinander beweglichen Komponenten der Stauförderkette (S) Beläge oder Büchsen aus Werkstoffen mit selbstschmierenden Eigenschaften wie Kunststoff, Keramik oder Sintermaterial vorgesehen sind.

9. Stauförderkette nach Anspruch 2, **dadurch gekennzeichnet**, daß die Innenlasche oder das Innenlaschenpaar (2') mit den beiden Buchsen (3', 4') ein einteiliger und durch Pressen, Fließpressen, Schmieden, Gesenkschmieden, Sintern oder dgl. hergestellter Formteil ist.

## Claims

1. An accumulation conveyor chain (F) comprising a link chain (4) with alternating inner and outer link plates (1, 2, 2') coupled via hollow or solid hinge bolts (5, 6) in which the sleeves (3, 4) are fixed in the inner link plates and the hinge bolts rotatably traversing the sleeves are fixed in the outer link plates, large-diameter conveyor rollers (R) being mounted on sleeves (4) predetermined along the chain length and smaller rollers (L) being mounted at both sides on hinge bolts (6) extended outwardly beyond their sleeves, **characterized in** that the hinge bolts (5) are located in sleeves (3) free from conveyor rollers (R) in unextended fashion and free from rollers (L).

2. An accumulation conveyor chain according to claim 1, **characterized in** that in each case an inner link plate or a pair of inner link plates (2, 2') is disposed in the longitudinal center of the two sleeves (3, 4) adjacent in the longitudinal direction of the chain at a distance from the outer link plates (1) and that a conveyor roller (R) is disposed between the inner link plate or the pair of inner link plates (2, 2') and the outer link plate (1) on at least one outer side of the inner link plate or the pair of inner link plates (2, 2').

3. An accumulation conveyor chain according to at least one of claims 1 or 2, **characterized in** that one conveyor roller (R) each is provided at both sides of the inner link plate or the pair of inner link plates (2, 2') and that, preferably in a hollow bolt link chain (H) with normal link pitch, two conveyor rollers (R) and two rollers (L) are disposed at each second hinge bolt (6).

4. An accumulation conveyor chain according to claim 2, **characterized in** that the contour of the inner link plate or the pair of inner link plates (2, 2') overlaps the contour of the conveyor roller (R) on the sleeve (4) on the next following inner link plate or pair of link plates (2, 2').

5. An accumulation conveyor chain according to at least one of claims 1 to 4, **characterized in** that the ends (9) of the shorter hinge bolts (5) are disposed directly at the outer sides (10) of the outer link plates (1) and are preferably located whtin the chain wheel engagement areas (11) and possibly the chain guide engagement areas (11) of the rollers (L).

6. An accumulation conveyor chain according to at least one of claims 1 to 5, **characterized in** that, for the pull-off protection of each roller (L), the free end of the longer hinge bolt (6) is formed directly at the front side (8) of the roller (L) in thickened fashion by means of cold forming, e.g. upsetting, riveting, or the like.

7. An accumulation conveyor chain according to claim 6, **characterized in** that the free end (7) is cold formed by means of upsetting in at least two diameter planes (12) being staggered with respect to each other about the axis of the hinge bolt, e.g. multiple roof riveting.

8. An accumulation conveyor chain according to claims 1 to 7, **characterized in** that liners or sleeves of materials with self-lubricating properties, e.g. plastics, ceramics or sintered material, are provided between the components of the accumulation conveyor chain (S), which are movable relative to each other.

9. An accumulation conveyor chain according to claim 2, **characterized in** that the inner link plate or the pair of innner link plates (2') with the two sleeves (3', 4') is a one-partite shaped part manufactured by pressing, extruding, forging, swaging, sintering and the like.

## Revendications

1. Chaîne de convoyeur à accumulation (F) comprenant une chaîne articulée (H) composée de maillons intérieurs et extérieurs (1, 2; 2') montés en alternance, accouplés les uns aux autres par l'intermédiaire d'axes d'articulation (5, 6) creux ou pleins, où les douilles (3, 4) sont fixées dans les maillons intérieurs, et où les axes d'articulation, qui tournent dans et traversent les douilles, sont fixés sur les maillons extérieurs, des galets convoyeurs (R) de grand diamètre étant montés sur des douilles (4) prédéterminées réparties sur la longueur de la chaîne, et des galets de roulement (L) étant montés des deux côtés sur les axes d'articulation (6) prolongés au-delà de leurs douilles, caractérisée en ce que les axes d'articulation (5) placés dans les douilles (3) non pourvues de galets convoyeurs (R) ne sont pas rallongés et sont exempts de galets de roulement (L).

2. Chaîne de convoyeur à accumulation selon la revendication 1, caractérisée en ce que respectivement un maillon intérieur ou un couple de maillons intérieurs (2, 2') est disposé longitudinalement au milieu entre deux douilles (3, 4) juxtaposées dans le sens longitudinal de la chaîne, à une distance des maillons extérieurs (1), et en ce qu'un galet convoyeur (R) est disposé entre le maillon intérieur ou le couple de maillons intérieurs (2, 2') et le maillon extérieur (1), sur au moins un côté extérieur du maillon intérieur ou du couple de maillons intérieurs (2, 2').

3. Chaîne de convoyeur à accumulation selon l'une au moins des revendications 1 ou 2, caractérisée en ce que respectivement un galet convoyeur (R) est prévu des deux côtés du maillon intérieur ou du couple de maillons intérieurs (2, 2'), et en ce que, dans le cas d'une chaîne articulée (H) à axes creux présentant un pas normalisé de préférence, deux galets convoyeurs (R) et deux galets de roulement (L) sont respectivement prévus sur un axe d'articulation (6) sur deux.

4. Chaîne de convoyeur à accumulation selon la revendication 2, caractérisée en ce que les contours du maillon intérieur ou du couple de maillons intérieurs (2, 2') et les contours du galet convoyeur (R) monté sur la douille (4) du maillon intérieur suivant ou du couple suivant de maillons intérieurs se recouvrent.

5. Chaîne de convoyeur à accumulation selon l'une au moins des revendications 1 à 4, caractérisée en ce que les extrémités (9) des axes d'articulation plus courts (5) sont placées immédiatement au niveau des faces extérieures (10) des maillons extérieurs (1) et se situent de préférence à l'intérieur des zones d'engagement (11) du barbotin et, le cas échéant, des guides de chaîne, pour les galets de roulement (L).

6. Chaîne de convoyeur à accumulation selon l'une au moins des revendications 1 à 5, caractérisée en ce que, pour protéger chaque galet de roulement (L) contre l'arrachement, l'extrémité libre (7) de l'axe d'articulation plus long (6) est élargie directement au niveau de la face frontale (8) du galet de roulement (L) par déformation à froid, par exemple par refoulement, rivetage ou similaire.

7. Chaîne de convoyeur à accumulation selon la revendication 6, caractérisée en ce que l'extrémité libre (7) est déformée à froid par refoulement dans au moins deux plans diamétraux (12) décalés l'un par rapport à l'autre autour de l'axe géométrique de l'axe d'articulation, par exemple par rivetage multiple en "toit".

8. Chaîne de convoyeur à accumulation selon les revendications 1 à 7, caractérisée en ce que des revêtements ou coussinets faits en matériaux présentant des propriétés autolubrifiantes, tels que des matières plastiques, des céramiques ou des matériaux frittés, sont prévus entre les composants de la chaîne de convoyeur à accumulation (S) qui peuvent se déplacer les uns par rapport aux autres.

9. Chaîne de convoyeur à accumulation selon la revendication 2, caractérisée en ce que le maillon intérieur ou le couple de maillons intérieurs (2') est réalisé par estampage, formage par fluage, forgeage, matriçage, frittage ou similaire, sous forme d'une pièce formée monobloc incorporant les deux douilles (3', 4').
